(19) Europäisches Patentamt / European Patent Office / Office européen des brevets

(11) **EP 3 910 802 B1**

(12) **EUROPEAN PATENT SPECIFICATION**

(45) Date of publication and mention
of the grant of the patent:
**28.09.2022   Bulletin 2022/39**

(21) Application number: **20174087.5**

(22) Date of filing: **12.05.2020**

(51) International Patent Classification (IPC):
*H04B 3/54* *(2006.01)*      *H04B 15/02* *(2006.01)*
*H04N 1/00* *(2006.01)*

(52) Cooperative Patent Classification (CPC):
**H04B 3/54**

(54) **MOTOR ARRANGEMENTS**

MOTORANORDNUNGEN

AGENCEMENTS DE MOTEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**17.11.2021   Bulletin 2021/46**

(73) Proprietor: **SICK AG
79183 Waldkirch (DE)**

(72) Inventor: **Francescon, Massimo
10132 Turin (IT)**

(74) Representative: **Manitz Finsterwald
Patent- und Rechtsanwaltspartnerschaft mbB
Martin-Greif-Strasse 1
80336 München (DE)**

(56) References cited:
**JP-A- 2012 178 758**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

The present disclosure relates to motor arrangements.

Driving electric motors may not only require a motor drive signal to be provided to the electric motor, but may also involve data provided by slave devices, for example sensors. For example sensor data (for example measurement data or sensor configuration data) is to be provided from and to a plurality of sensors mounted at the motor side.

Several digital interfaces have been developed in the last decades for the particular application of motor feedback. For example Hiperface-DSL® led the way to the so called "single cable solution" with the integration of the lines for the sensor data inside the power cable.

JP 2012 178758 A discloses a device with a master module and at least one slave module controlled by the master module, which uses a power line supplying voltage to the master module and the slave module as a signal transmission line. The slave module includes a CPU, a modulation/demodulation unit including a local oscillator, and a motor driver for controlling a stepping motor. There is provided a data transmission method in which, in the device, an oscillation frequency of the local oscillator is set so that the frequency band of a communication signal modulated by the modulation/demodulation unit is higher than the frequency band of motor noise derived from the stepping motor.

All conventional single cable solutions rely on either provided separate lines for the various slaves, such as sensors, or on applying a daisy chain, in which the plurality of sensors are connected in series to be addressed by a single line.

Separate lines increase the thickness of the cable, while using a daisy chain increases the number of ports that are necessary at each sensor.

Accordingly, there is a need for a more efficient and reliable communication between a control device side and a sensor side for transmission of sensor data.

The present invention is defined by the attached independent claims.

Other preferred embodiments may be found in the dependent claims.

In one aspect, the present disclosure is directed at a motor arrangement comprising: a motor; a plurality of sensors configured to determine sensor data related to the motor; a signal distribution device; a control device configured to transmit or receive sensor signals to or from the plurality of sensors via the signal distribution device; wherein the signal distribution device comprises: a first interface configured to receive or transmit signals from or to the control device; a plurality of second interfaces, each second interface configured to receive or transmit signals from or to a respective sensor of the plurality of sensors; wherein the first interface is coupled to a first winding; and wherein each of the second interfaces is coupled to a respective second winding inductively coupled to the first winding, wherein the signal distribution device further comprises: a further winding coupled to a negative impedance so that an impedance related to the second interfaces and the further winding corresponds to an impedance related to the first interface.

In other words, signals are transmitted between a control device on one side and a plurality of sensors on another side using a signal distribution device based on magnetic coupling between windings connected to the control device and the plurality of sensors. The control device and the plurality of sensors may not be coupled electrically, and may not be in radio communication, but the only form of coupling between control device and the plurality of sensors may be the magnetic coupling. A winding (for example the first winding or each of the second winding of the various second windings) may also be referred to as a coil.

The number of turns in the first winding may be at least substantially identical to the number of turns in each of the second windings. For example, in a case of three sensors, three second windings may be provided (for example a first second winding, a second second winding, and a third second winding), and the number of turns in the first winding may be at least substantially identical to the number of turns in the first second winding and at least substantially identical to the number of turns in the second second winding and at least substantially identical to the number of turns in the third second winding. A turn (of the winding) may also be referred to as a loop (or as a loop of the winding).

The control device may be referred to as a master device, and the sensors may be referred to as slaves (or slave devices).

The first winding and the respective second windings may be part of the signal distribution device. The control device and/or the plurality of sensors may be a part of the signal distribution device, or they may be provided external to the signal distribution device.

The control device may be configured to transmit a control signal to the motor. The control device may be configured to control the sensors, send configuration data to the sensors, and receive measurement data from the sensors.

According to another aspect, the signal distribution device further comprises a magnetic core, wherein the first winding and the respective second windings are provided around at least respective portions of the magnetic core. This may provide for good magnetic coupling, so that a varying current through the first winding generates a varying magnetic field, which induces a current in the various second windings. Likewise, a varying current through one of the second windings generates a varying magnetic field, which induces a current in the first winding. Thus, signals may be transmitted between the control device and the plurality of sensors.

According to another aspect, an impedance related to the second interfaces corresponds to an impedance related to the first interface, which may be referred to as impedance matching. The impedance matching may avoid line reflections that would destroy the functional signal. Furthermore, the impedance matching may allow for a high efficiency of the coupling. The physical connection other than point to point may make it necessary to respect impedance matching on both ends of the line.

According to another aspect, each of the second interfaces is coupled to a respective resistor so that an impedance related to the second interfaces corresponds to an impedance related to the first interface.

According to another aspect, the signal distribution device further comprises a further winding coupled to a negative impedance (for example a negative resistance comprises a negative impedance converter with current inversion) so that an impedance related to the second interfaces and the further winding corresponds to an impedance related to the first interface. The negative impedance compensates for the additional impedances arising from more than one second winding (for more than one sensor) and only one first winding (for one control device). The number of turns in the further winding may be at least substantially identical to the number of turns in the first winding, and at least substantially identical to the number of turns in each of the second windings.

According to another aspect, the first interface is configured to transmit data from the control device to one of the sensors by exciting the plurality of second windings of the respective sensor by the first winding. According to another aspect, the second interface is configured to transmit data from at least one of the sensors to the control device by exciting the first winding by the second winding coupled to (or connected to) the respective sensor.

According to another aspect, the signal distribution device is provided at a motor side. Thus, only one set of lines connecting the control device and the signal distribution device may be required between the control side and the motor side, irrespective of the number of sensors provided at the motor side.

According to another aspect, the motor arrangement further comprises a cable comprising at least one first line and at least one second line in a common cable jacket, wherein the control device is connected via the cable and the signal distribution device to the motor and the plurality of sensors, the control device configured to transmit a control signal to the motor via the at least one first line and to transmit or receive a sensor signal to or from the plurality of sensors via the at least one second line and the signal distribution device. This may allow one cable having to be connected between a controller side and a motor side.

According to another aspect, the signals comprise a plurality of carrier frequencies. For example, the signals may be signals modulated using an orthogonal frequency-division (OFDM) multiplexing method. The frequencies of the signals may carry the information, and at the same time, the frequencies may be used to excite the windings to generate a varying magnetic field used for the data distribution.

According to another aspect, the control device is configured to control communication between the control device and the plurality of sensors devices using time division multiplexing. For example, the data transmission may follow a half-duplex scheme between the control device and the plurality of sensors, so that a time division multiplexing occurs (in other words: at any time, the control device or the plurality of sensors may transmit signals, but at no time, the control device may transmit signals simultaneously to any one of the plurality of sensors).

According to various embodiments, the control device may be configured to control communication from the control device to the plurality of sensors using address coding for the plurality of sensors, for example by assigning specific OFDM codes or by explicit address assignment.

According to various embodiments, using a frequency division scheme, the analogic nature of the signal may be exploited in a system where a bus structure connects one master with more than one slave. Any number of slaves (for example sensors) may be provided, for example one sensor, or two sensors, or three sensors, or any number N of sensors (with an integer number N). Between the communication nodes (i.e. between the control device and the plurality of sensors) a passive coupler (for example the signal transmission device) may be provided.

According to various embodiments, signal amplification may be provided to overcome the mixing attenuation and/or to increase the interface ruggedness in extreme cases.

The motor arrangement and the signal distribution device according to various embodiments may provide a high flexibility for a signal hub.

According to various embodiments, implementing the sensors as slaves may use a minimum resource amount and may be fit for every application; no additional ports may be required on the smaller sensors (for example encoders) which would hardly accept two more connectors due to their reduced dimensions. Furthermore, functions in a communication ASIC (application-specific integrated circuit) means may be saved, which may reduce its dissipation which is a big concern due to the high ambient temperature requirement of the motor feedback application. Since only one connection (for example a DSL connection, for example a DSL4.0 connection like will be described in more detail below) is provided on each sensor, the motor arrangement according to various embodiment may be very reliable. While the connection may be a DSL connection or a DSL4.0 connection, it will be understood that various other kinds of connection may be used, and that the motor arrangement is not restricted to a motor arrangement in which a DSL connection or a DSL4.0 connection is used.

According to a further aspect, a signal distribution device may comprise: a first interface configured to receive or transmit signals from or to a master device; a plurality of second interfaces, each second interface configured to receive or transmit signals from or to a respective slave device; wherein the first interface is coupled to a first winding; and wherein each of the second interfaces is coupled to a respective second winding inductively coupled to the first winding.

In one aspect, the present disclosure is directed at a data transmission method comprising: providing a motor power supply via at least one first line to a motor; determining sensor data related to the motor; determining a sensor signal based on the sensor data using a plurality of carrier frequencies; and transmitting or receiving the sensor signal via at least one second line provided in a common cable jacket with the at least one first line. Such a data transmission method may be referred to as a DSL4.0 data transmission method, and a connection which makes use of such a data transmission method may be referred to as a DSL4.0 connection.

In other words, a motor power supply may be provided via a single cable (i.e. a cable provided in a single cable jacket) together with sensor signals, wherein the sensor signals are obtained from sensor data (for example sensor measurement data from a sensor or sensor configuration data for a sensor) using a plurality of carrier frequencies. The motor power supply may be similar or identical to an "on/off" signal for driving the motor; for example, the motor power supply may be trapezoidal wave with an amplitude of 600 V and slew rate up to 10 kV/$\mu$s. The motor arrangement may withstand such high slew rates, i.e. data transmission on the at least one second line may not be seriously affected by the motor power supply on the at least one first line, since a plurality of carrier frequencies are used, which may reduce the effect of possible crosstalk between the at least one first line and the at least one second line.

Even if strong crosstalk between the motor cable(s) (i.e. the at least one first line) and the data line (i.e. at least one second line) is present, the physical layer as well as the protocol (using the plurality of carrier frequencies, which may entail an increased bandwidth) of the at least one second line according to various embodiments are robust in order to engage a reliable communication (for example between a control unit and a sensor mounted at the motor side), which may allow high throughput, short latency and accurate measurement, for example as required by the Industry 4.0 approach. With the increased bandwidth, some of the bandwidth may be used for redundancy and this may increase the robustness. A further source of robustness may be provided by avoiding frequencies in the lower spectrum portion, which may be obtained generically by a modulation with a single carrier (or single carrier frequency) or a plurality of carriers (or carrier frequencies), and exploiting a high-pass PHY (physical layer) to attenuate the effect of the crosstalk.

According to another aspect, the motor power supply comprises rising edges with a pre-determined rise time, and the plurality of carrier frequencies comprises respective frequencies which are selected based on the inverse of the rise time; and/or the motor power supply comprises falling edges with a pre-determined fall time, and the plurality of carrier frequencies comprises respective frequencies which are selected based on the inverse of the fall time. The selection of the respective frequencies may be done once, based on the average parameters of the possible applications. If the particular application generates an unavoidable disturb overlapping with the one or more frequencies, those one or more of the fixed selected frequencies may be abandoned (in other words: may not be used).

A specific rise time of the motor power supply corresponds to a frequency of the inverse of the rise time, and crosstalk between lines carrying the motor signal and lines carrying the sensor data may be high for frequencies corresponding to that frequency. As such, carrier frequencies which are higher than the frequency corresponding to the inverse of the rise time, may be less affected by crosstalk, which may increase robustness against noise like crosstalk from the lines carrying the motor power supply .

According to various embodiments, the plurality of carrier frequencies comprises respective frequencies which are higher than 10% of the inverse of the rise time, or the plurality of carrier frequencies comprises respective frequencies which are higher than 20% of the inverse of the rise time, or the plurality of carrier frequencies comprises respective frequencies which are higher than 50% of the inverse of the rise time, or the plurality of carrier frequencies comprises respective frequencies which are higher than the inverse of the rise time, or the plurality of carrier frequencies comprises respective frequencies which are higher than 10% of the inverse of the fall time, or the plurality of carrier frequencies comprises respective frequencies which are higher than 20% of the inverse of the fall time, or the plurality of carrier frequencies comprises respective frequencies which are higher than 50% of the inverse of the fall time, or the plurality of carrier frequencies comprises respective frequencies which are higher than the inverse of the fall time.

According to another aspect, the plurality of carrier frequencies comprises respective frequencies of at least 10 MHz.

According to another aspect, the sensor signal comprises a data transmission rate of more than 10 MBaud, for example at least 40 MBaud. Compared to conventional methods, the data transmission rate may be increased due to the reduced effect of crosstalk, which may be achieved by using the plurality of carrier frequencies.

According to another aspect, the at least one second line provides high pass filter characteristics. With the high pass filter characteristic, low frequency noise may be removed, and robustness of the data transmission of the sensor signal may be increased.

According to another aspect, the sensor signal is determined based on orthogonal frequency-division multiplexing (OFDM). Using OFDM, the sensor data may be encoded on the plurality of carrier frequencies to obtain the sensor signal. The carrier frequencies may be selected so that crosstalk (or the effect of crosstalk) between the at least one first line and the at least one second line is low.

According to another aspect, the sensor signal is determined using an error correction scheme, for example based on Golay encoding. With an error correction scheme, noise (for example due to crosstalk to the at least one second line from the at least one first line) which effects one or more bits of the transmitted sensor data may be compensated. For example, additional bits may be included in the sensor signal, which may allow detection and recovery of erroneously transmitted bits.

According to another aspect, the sensor data comprises a plurality of bits; and determining the sensor signal comprises: grouping a pre-determined number of the plurality of bits into an encoding block; determining at least one error correction bit based on the encoding block; adding the at least one error correction bit to the encoding block; and encoding the encoding block using the plurality of carrier frequencies. More than one additional error correction bit may be added. With the one or more error correction bits, a transmission error of the sensor data may be detected and/ or corrected. It will be understood that with one error correction bit, an error may be detected (and then for example the respective data may be retransmitted to correct the error), and with more than one error correction bit, the error may be corrected in the received data (without re-transmitting the data).

According to another aspect, the data transmission method further comprises transmitting direct current power via the at least one second line. This may reduce the total number of lines required inside the cable jacket.

According to another aspect, at least one carrier frequency of the plurality of carrier frequencies (for example a carrier frequency which does not represent the sensor data, i.e. which is not used for encoding the sensor data into the sensor signal) is determined based on a minimization of a total signal strength of the plurality of carrier frequencies. This may lower the peak of a symbol represented by the plurality of frequencies, which may avoid clipping of the sensor signal, and which may thus increase reliability of the data transmission method.

In another aspect, the present disclosure is directed at a cable comprising: the at least one first line, the at least one second line, and the common cable jacket used in the method as described above.

In another aspect, the present disclosure is directed at a motor arrangement comprising: a motor; a sensor configured to determine sensor data related to the motor; a cable comprising at least one first line and at least one second line in a common cable jacket; and a control device connected via the cable to the motor and the sensor, the control device configured to transmit a control signal to the motor via the at least first line and to transmit or receive a sensor signal to or from the sensor via the at least one second line; wherein the sensor signal comprises a plurality of carrier frequencies.

Using the plurality of carrier frequencies, the effect of crosstalk between the at least one first line and the at least one second line may be reduced, which may allow for a reduced shielding of the at least one second line and/or an increased data rate for transmission of the sensor data (which are physically transmitted via the sensor signal). With a reduced shielding, the cable drag chain may be reduced, which may enhance handling of the cable.

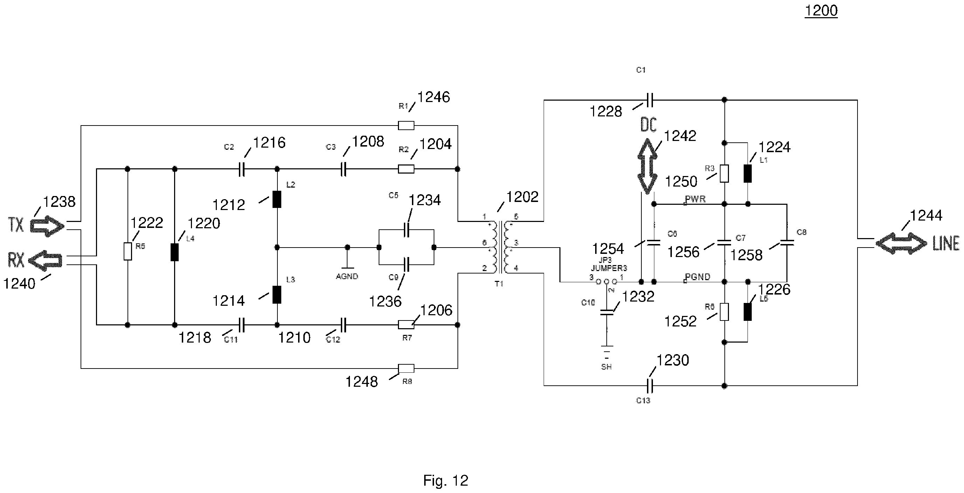

According to another aspect, the at least one second line comprises a twisted pair of lines, which may, for example, be up to 100 m long. With the twisted pair of lines, crosstalk may be reduced, so that the frequency based data transmission method using a plurality of carrier frequencies may be even more effective. DC (direct current) power may be injected and/or retrieved on the at least one second line. DC power injection may be provided by means of a splitter made with signal blocking inductors (for example inductance L1 (1224) and inductance L5 (1226) as illustrated in Fig. 12) and DC blocking capacitors (for example capacitor C1 (1228) and capacitor C13 (1230) as illustrated in Fig. 12). For example, the inductors may have an inductance of 100 $\mu$H, and the capacitors may have a capacitance of 470 nF.

In another aspect, the present disclosure is directed at the cable of the motor arrangement as described above.

In another aspect, the present disclosure is directed at an ASIC (application-specific integrated circuit). Providing the function of the data transmission method according to various embodiments in an ASIC entails advantages at customer side, for example less variance in the implementation means lesser and easier support, use of an FPGA (field programmable gate array) may be avoided, and at least a part of the ASIC cost may be distributed into the existing PHY components like transceiver or spare components.

Intrinsic robustness of the data transmission method and the motor arrangement may make a one cable solution (wherein one cable includes the at least one first line and the at least one second line) attractive and may reduce requirements for support. Compared to commonly used one cable solutions, the bandwidth according to various embodiments may more than double which may improve the control loop and enable new applications, for example Industry 4.0 (I4.0) applications. Furthermore, according to various embodiments, smaller and cheaper PHY components may be used due to higher frequencies used.

With a data transmission and a related motor arrangement according to various embodiments, data throughput and robustness against noise may be increased.

Based on the increased robustness due to the various frequencies used for data transmission, a cable which includes lines for the motor power supply and for sensor data may require less shielding for the lines carrying the sensor data to achieve the same data rate of conventional data transmission methods, or a higher data rate may be achieved with same shielding of conventional cables.

Exemplary embodiments and functions of the present disclosure are described herein in conjunction with the following drawings, showing schematically:

Fig. 1      a commonly used motor arrangement;

Fig. 2      a motor arrangement according to various embodiments;

Fig. 3      an illustration with a signal distribution device according to various embodiments;

Fig. 4      an illustration with a signal distribution device according to various embodiments;

Fig. 5      a circuit providing a negative resistance according to various embodiments;

Fig. 6      an illustration of a motor arrangement according to various embodiments;

Fig. 7      an illustration of signal transmission according to various embodiments;

Fig. 8      an illustration of a cyclic prefix according to various embodiments;

Fig. 9      an illustration of several different constellations according to various embodiments;

Fig. 10      an illustration of a model of the effect of the physical layer according to various embodiments;

Fig. 11      an illustration of results obtained by a simulation of the model of Fig. 10;

Fig. 12      an illustration of a detailed model of the physical layer according to various embodiments;

Fig. 13      an illustration of an error encoding scheme where the bit stream of every logical channel is protected individually with the error correction coding scheme according to various embodiments; and

Fig. 14      a flow diagram illustrating a data transmission method according to various embodiments.

Driving electric motors may not only require a motor drive signal or motor power connections to be provided to the electric motor, but may also involve sensor data (for example measurement data or sensor configuration data) to be provided from and to a sensor mounted at the motor side.

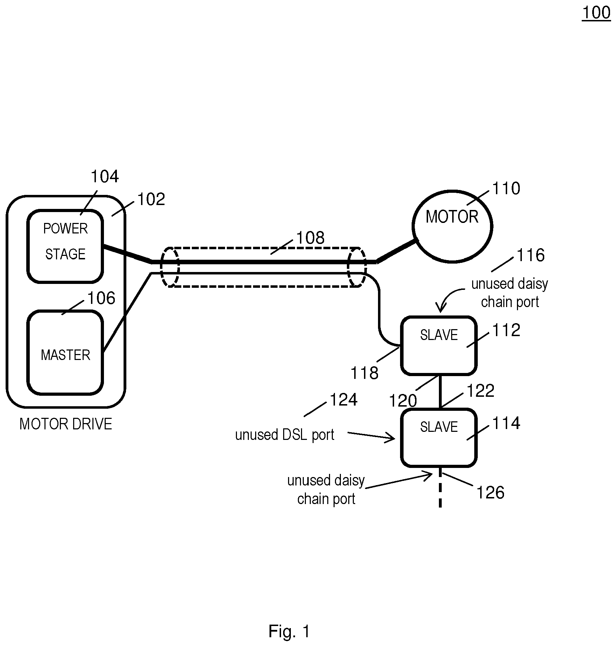

Fig. 1 shows a commonly used motor arrangement 100. A motor drive 102 may include a power stage 104 and a DSL master 106. The power stage 104 and the DSL master 106 may be connected via a common cable 108 to a motor 110 and a first slave 112; for example the power stage 104 may be connected to the motor 110, and the DSL master 106 may be connected to the first slave 112. The first slave 112 may be connected to a second slave 114. The first slave 112 may include a DSL port 118, a first daisy chain port 116, and a second daisy chain port 120. Likewise, the second slave 114 may include a DSL port 124, a first daisy chain port 122, and a second daisy chain port 126. In a daisy chain arrangement, a plurality of slaves (for example the first slave 112 and the second slave 114) may be connected in a daisy chain fashion, wherein only one (for example only the first slave 112) is the DSL master counterpart, i.e. is in direct communication with the DSL master 106. The second slave 114 is connected to the first slave 112 via the second daisy chain part 120 of the first slave 114 and the first daisy chain port 122 of the second slave 114. As can be seen from Fig. 1, several resources are wasted; for example the first daisy chain port 116 of the first slave 112, the DSL port 124 of the second slave 114, and the second daisy chain port 126 of the second slave 114 are unused. Even creating special hardware versions, which is not optimal in itself, doesn't save the resources (in particular the pin count) which are anyway present in the ASIC. The DSL functionalities may be implemented in an ASIC, so that most of the saved resources may be present, and then wasted, also in simple use cases where just a point to point connection is enough. Furthermore, the additional daisy chain on a set of slaves (for example sensors, for example encoders) may be a source of EMC (electromagnetic compatibility) issues.

According to various embodiments, the slave devices may be connected in a different topology using just the standard DSL port (for example using a signal distribution device). Thus, the resources dedicated to the daisy chain communication can be saved.

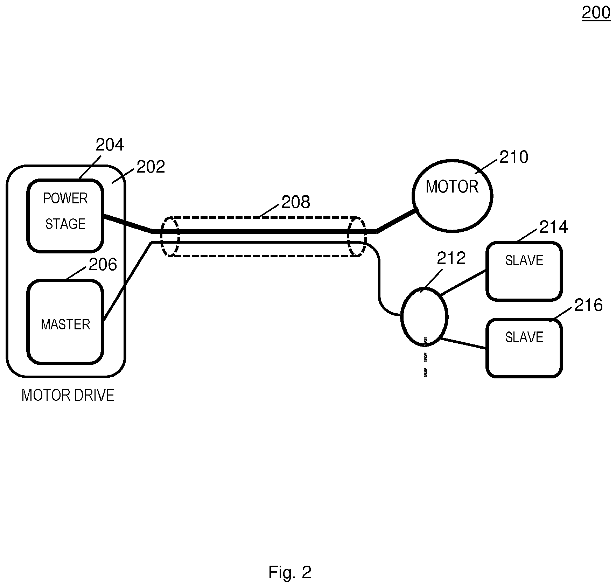

Fig. 2 shows a motor arrangement 200 according to various embodiments. A motor drive 202 includes a power stage 204 and a DSL master 206. The power stage 204 and the DSL master 206 may be connected via a common cable 208 to a motor 210 and a signal distribution device 212; for example the power stage 204 is connected to the motor 210, and the DSL master 206 is connected to the signal distribution device 212. The signal distribution device 212 is connected to a first slave 214 and to a second slave 216, for example in a star topology. It will be understood that although only two slaves 214, 216 are illustrated in Fig. 2, any number of slaves may be provided.

Each of the slaves (for example the first slave 214 and the second slave 216) is connected to the signal distribution device 212 via a DSL interface.

DSL4.0 according to various embodiments is based on a frequency division multiplexing technique, which allows organizing the system so that multiple slaves are logically on a bus and answer to the master inquiries at the same time. Considerations about the clock synchronization and known requirements narrow the set of interesting physical arrangements to the situation where one long cable, including a data line and motor power wiring, connects the master at one side with the bunch of slaves on the other side, and then a star topology where several slaves interface a concentrator (for example the signal distribution device). The highest layers of the protocol may entail different channels working in parallel.

According to various embodiments, coupling more than two DSL ports (for example one DSL port of the DSL master and one or more DSL ports of slave devices) so that every listening participant receives the sum of all the active signals is achieved by means of a multiple winding transformer (for example the signal distribution device). This may galvanically isolate the ports and may thus improve the common mode rejection.

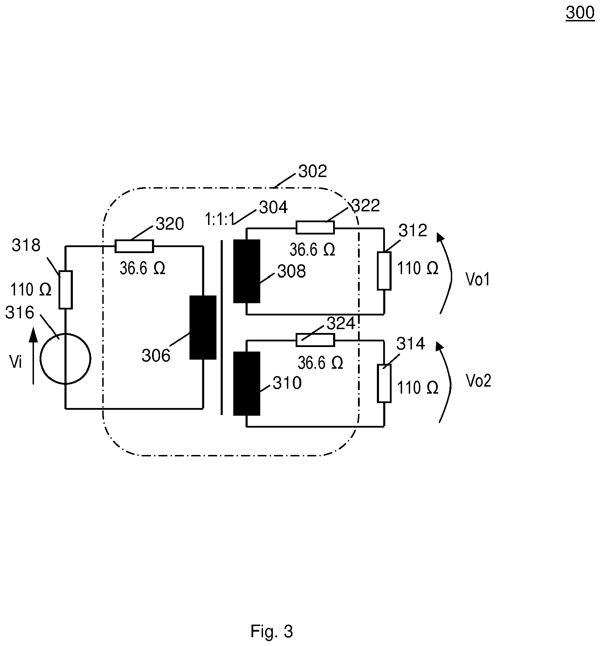

Fig. 3 shows an illustration 300 with a signal distribution device 302 according to various embodiments. The signal distribution device 302 may include a first winding 306 (to which a DSL master may be connected), a second winding 308 (to which a first slave device may be connected), and a (further) second winding 310 (to which a second slave device may be connected). The first winding 306, the second winding 308, and the (further) second winding 310 may be magnetically coupled using a magnetic core 304. The number of turns may be identical for the first winding and each of the second windings.

Matching the impedances may require added resistance on the signal path, which entails unwanted attenuation.

The talking port (which may be where the DSL master may be connected) may be represented with a generator 316 and an input impedance of 110 Ω (318), while the listening ports (where for example the slave devices may be connected) may just show their input impedance of 110 Ω (312, 314).

Resistors 320, 322, 324 of 36.6 Ω may be added to provide for the impedance matching, but entail an insertion loss of 6 dB with respect the point to point arrangement. Further 3.6 dB are lost in case of a 4 ports coupler and so on.

Assuming that the three resistors 320, 322, 324 have the same impedance $R_A$. The goal is to see an impedance of 110 Ω from each port (i.e. from the talking port and the listening ports), provided that all ports are loaded with the same impedance; in other words the port to the left in Fig. 3 (i.e. the talking port) must see an impedance of 110 Ω. The adapting resistor $R_A$ may then be calculated to satisfy that:

$$\frac{1}{\frac{1}{R_A + 110} + \frac{1}{R_A + 110}} + R_A = 110$$

With the transformer ratio of 1:1:1, it can be thought (apart from galvanic isolation) as a parallel of all the connected circuits at least for the differential mode signals which are the targets now. The fraction in the formula represents the parallel of the two branches at the right (in other words: the listening ports), which value is visible also from the left winding. The adapting resistance $R_A$ is to be added in order to calculate the impedance seen by the arrow point, which must equal 110 Ω. Solving for $R_A$ gives:

$$R_A = \frac{110}{3}\,\Omega.$$

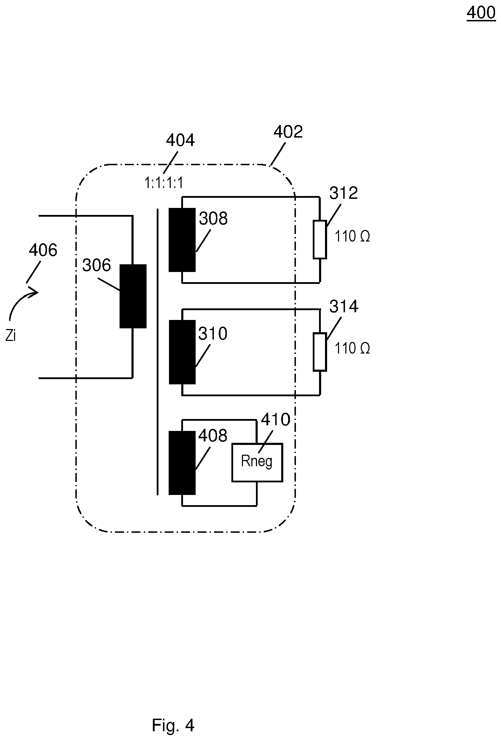

Fig. 4 shows an illustration 400 with a signal distribution device 402 according to various embodiments. Similar to the signal distribution device 302 of Fig. 3, the signal distribution device 402 includes a first winding 306 for a master device, a (first) second winding 308 for a first slave device, and a (second) second winding 310 for a second slave device. The signal distribution device 402 further includes a further winding 408. The first winding 306, the second winding 308, the second winding 310, and the further winding 408 are magnetically coupled using a magnetic core 404. The number of turns may be identical for the first winding 306, each of the second windings 308, 310, and the further winding 408. A negative (differential) resistance 410 is coupled to the further winding 408 to provide impedance matching.

The negative differential resistance 410 nulls (or compensates) the effect of the added ports, which allows avoiding the series resistors as shown in Fig. 3 and thus eliminates the insertion loss.

The desired value Rneg of the negative differential resistance 410 is provided based on that the impedance seen by one port Zi (for example 406) must be the characteristic resistance of 110 Ω, and, if the turn ratio is unitary (or identical) for all windings, so that it may be derived:

$$Zi = \frac{1}{\frac{1}{110} + \frac{1}{110} + \frac{1}{Rneg}} = 110\,\Omega,$$

and then:

$$Rneg = \frac{1}{\frac{1}{110} - \frac{1}{110} - \frac{1}{110}} = -110\,\Omega.$$

Illustratively, Rneg must null the effect of the third port impedance (i.e. the impedance of the port corresponding to the second winding 310, to which a second slave device may be connected) so as to restore the two-ports arrangement. In a general case, Rneg must null all port impedances exceeding the first two, so for instance a 4 ports concentrator (with one port for the master device and three ports for three slave devices) may require Rneg = -55 $\Omega$.

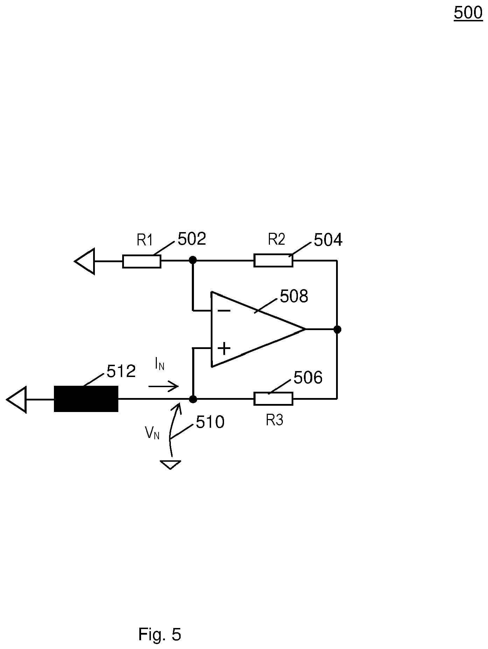

Fig. 5 shows a circuit 500 providing a negative resistance to a winding 512 according to various embodiments. The circuit 500 includes a first resistor 502, a second resistor 504, a third resistor 506, an operational amplifier 508. A voltage may be provided at node 510. The circuit 500 may be referred to as negative impedance converter with current inversion. The negative resistance is offered toward the signal ground, so that connecting the opposite end (in other words: left side) of the winding 512 to ground provides the negative resistance to the winding 512.

Analyzing this circuit under the ideal op amp (operational amplifier) hypothesis of infinite gain and null input current yields:

$$R_{neg} = Z_N = \frac{V_N}{I_N} = -\frac{R_1 R_3}{R_2}.$$

The circuit 500 may implement the "Rneg" block 410 of Fig. 4, exploiting the Miller effect.

According to various embodiments, data interfacing may be provided, wherein transfer data to and from a position encoder is provided while powering the position encoder through a single shielded twisted pair line which runs inside the same cable connecting an electric motor to its drive.

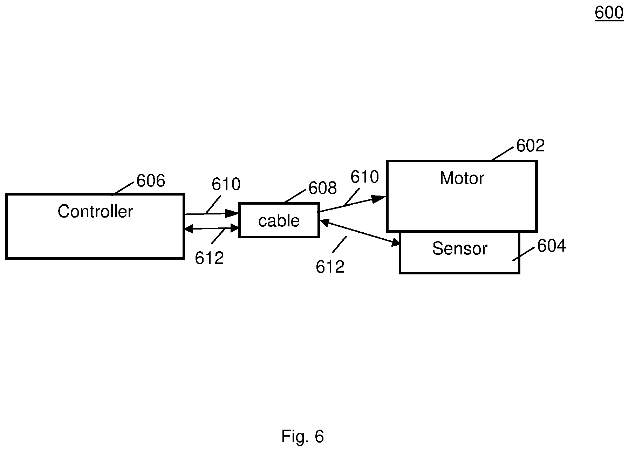

Fig. 6 shows an illustration 600 of a motor arrangement according to various embodiments with a motor 602, a sensor 604 associated with the motor 602, a control unit 606, and a cable 608 connecting the control unit 606 with the motor 602 and with the sensor 604. The cable 608 may include at least one first line 610 for providing the motor power supply from the control unit 606 to the motor 602, and at least one second line 612 for transmitting or receiving the sensor signal from or in the control unit 606. The at least one first line 610 and the at least one second line 612 may be provided in a common cable jacket, so that the at least one first line 610, the at least one second line 612, and the cable jacket form the cable 608. The sensor 604 may measure the state of the motor 602, for example its angle, velocity, temperature, voltage, current draw, or information about mechanical vibration of the motor of further external data (which may not necessarily be related to an axis of the motor). The sensor data may include the respective measurement results.

According to various embodiments, modulation may be used to increase the channel bandwidth, to transmit more than one bit in a single symbol and to free the lower portion of the spectrum. A high pass physical interface (PHY) may be provided to shorten the effect of the noise, and to reduce the number of affected symbols. ECC may be used to withstand errors at every foreseen noise event. The spectrum occupation of the signal may be restricted to the range between about 10 MHz and about 30 MHz. With an upper limit of 30 MHz, the use of expensive components and critical workmanship requirements toward the users may be avoided while achieving good transmission quality of the lines and normal quality lines can be used. A lower limit of 10 MHz may make it possible the use a physical layer with high pass behavior, which may provide for noise rejection and which may allow sharing the line with a DC (direct current) feeding function (to power the sensor).

Modulation may be provided, for example orthogonal frequency division multiplexing (OFDM).

In the following, the basic principle of OFDM, which is applied according to various embodiments, will be described.

For example, a signal waveform sampled at a rate which is an integer multiple of its period may be considered, for instance N=16 samples may be taken. The Fourier analysis decomposes this signal into a series of harmonics amplitude and phase. For example from the discrete samples $x_0$, $x_1$, ..., $x_{14}$, $x_{15}$, the harmonics:

$X_0$, $X_1$, ..., $X_7$, $X_8$

may be extracted using the Discrete Fourier Transform:

$$X_k = \sum_{n=0}^{N-1} x_n \cdot e^{-\frac{i2\pi}{N}kn}$$

Being the input series formed by real numbers, the $X_k$ may be as follows: $X_0$ may be a real number corresponding with the average value of the waveform; $X_1$, $X_2$, ..., $X_7$ may be complex numbers representing the amplitude and phase of the first seven harmonics of the signal; and $X_8$ may be a real number related to the presence of eighth harmonic and the relative phase of the sampling operation.

The signal must contain just the above harmonic components to avoid leakage and aliasing phenomena that would create crosstalk between the channels. At the transmitter side, such a signal may be generated by summing the different harmonics with the wanted amplitude and phase, or equivalently by an Inverse Discrete Fourier Transformation.

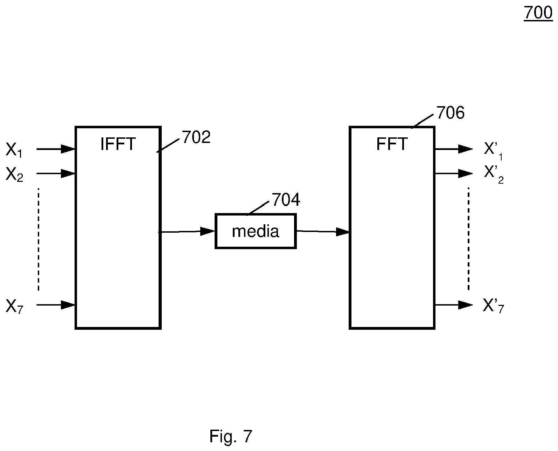

Fig. 7 shows an illustration 700 of signal transmission according to various embodiments. Several information sources $X_1$, $X_2$, ..., $X_7$ (for example sensor data) may be mixed into a single signal (for example sensor signal) using inverse (discrete) Fourier transform, which may be implemented as an inverse fast Fourier transform (IFFT) 702. The signal may be transmitted via media 704 (for example one or more lines in a cable). The received signal may then be separated based on the properties of the DFT (which may be implemented as a fast Fourier transform FFT 706). The received signal may thus provide the received data $X'_1$, $X'_2$, ..., $X'_7$ (which ideally are identical or similar to the transmitted data $X_1$, $X_2$, ..., $X_7$). The signal transmission illustrated in Fig. 7 may provide a system in which a set of independent (orthogonal) channels share the same media 704.

In an ideal case the received harmonics $X'_1$...$X'_7$ perfectly match the original information $X_1$...$X_7$. In the system of Fig. 7, the harmonic $X_0$ may purposely not be included in order to generate a DC (direct current) balanced signal. The harmonic $X_8$ may also not be included in the system of Fig. 7, since $X_8$ can't carry information like the other harmonics since it is exactly at the Nyquist frequency. However, $X_8$ may be used instead for synchronization purpose.

Considering the transfer function of the media 704 (which may include at least one line and the physical driver and receiver), the assumption $X_n=X'_n$ may not be exactly correct: each harmonic may undergo a different attenuation and phase rotation depending on its frequency. As far as the transformation is linear, the phase differences and amplitude ratios may be maintained, and equalization may be done at the receiver based on a known signal sent once by the transmitter. For example, during the startup phase, the transmitter (or sender) may transmit a signal with a known phase (for example with phase 0°) and known amplitude at all frequencies. The receiver may measure phases and amplitudes and may find the transformation to be applied to each component so as to recover the same readings (phase 0° and reference amplitude level). In practice, having chosen a modulation scheme (for example QPSK) where the amplitude is not affecting the received bit decision, it may be sufficient to adjust the phase only.

An advantage of this scheme is that it can be considered as made by individual narrowband transmission systems, so that equalization reduces to the simple abovementioned operation.

The memory effect of the media transfer function may generate intersymbolic interference (in other words: the tail of the response of one symbol may overlap with the next symbol), which may add unwanted harmonics to the results. According to various embodiments, this may be mitigated by separating the payload symbols in time, and providing a cyclical prefix (in other words: filling the spaces so that the incoming signal is prefixed by its last portion in order to put the line in condition similar to a steady state transmission of a periodical signal).

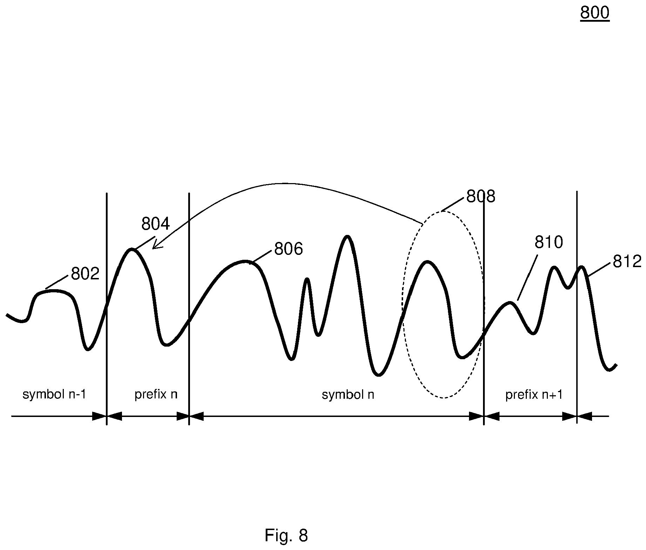

Fig. 8 shows an illustration 800 of a cyclic prefix according to various embodiments. An (n-1)th symbol 802 may be transmitted. Between the (n-1)th symbol 802 and the subsequent n-th symbol 806, an n-th prefix 804, which may be identical to the last portion 808 of the n-th symbol 806, may be transmitted.

Likewise, before transmission of the (n+1)th signal 812, an (n+1)th prefix 810 may be transmitted.

Each channel allows the transport of two physical quantities (for example amplitude and phase, or for example in-phase and quadrature components) for each transferred symbol. A discrete set of combinations of these quantities may be chosen as the symbol alphabet. Choosing an alphabet with more elements may allow a higher throughput as more bits are transported within one symbol, but also may make transmission errors more probable as less noise is enough to change one element into another.

The whole alphabet plotted on the complex plane may be called a constellation.

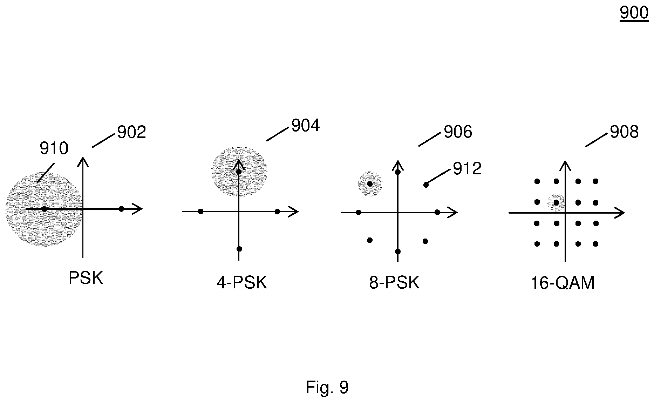

Fig. 9 shows an illustration 900 of several different constellations according to various embodiments. It will be understood that the constellations shown in Fig. 9 are examples only, and that constellations with more points exist. A PSK constellation 902, a 4-PSK constellation 904, a 8-PSK constellation 906, and a 16-QAM constellation 908 are illustrated in Fig. 9, wherein PSK stands for phase-shift keying and QAM stands for quadrature amplitude modulation. For each constellation, the horizontal axis represents the in-phase component and the vertical axis represents the quadrature component. The gray circles (one of which is exemplarily labelled with reference sign 910) show the allowed noise before a transmission error occurs. Each element of the alphabet is indicated by a dot, one of which is exemplarily labelled with reference sign 912.

According to various embodiments, the 4-PSK (which may be referred to as QPSK) constellation may be adopted (or used). The 4-PSK constellation may have a good noise margin and its decision zones may be easy to implement and independent from the amplitude. This last feature simplifies the equalization as just a phase alignment is sufficient; and furthermore, the signal amplitude may also be dynamically adapted to the available headroom without need for adjustment at the receiver side. Having 4 points, this alphabet allows carrying 2 bits per symbol.

According to various embodiments, where the signal spectrum may occupy the range between about 10 MHz and about 30 MHz, an implementation may be set up as follows:

| | |
|---|---|
| sampling frequency: | 75 MHz; |
| samples in a symbol: | 16; |
| samples in the prefix: | 4; and |
| modulation type: | QPSK. |

Each symbol plus its prefix may last 266.7 ns, and each channel may carry two bits, thus achieving a capacity of 7.5 MBaud.

The harmonics may have frequencies equal to $F_1$ =4.6875 MHz and its first six multiples from $F_2$ = 9.375 MHz up to $F_7$ = 32.8125 MHz. While $F_7$ is acceptably close to the fixed range (for example 10 MHz to 30 MHz), $F_1$ is way far from it. Thus, according to various embodiments, the information may be coded using just channels from 2 to 7 which amounts to a total capacity of 45 MBaud.

While countermeasures may be taken to avoid missing synchronization, a situation of missing synchronization may be possible. Thus, it has to be taken into account that the analyzer may not be synchronized with the symbol boundaries and it is not able to exclude the cyclical prefixes from the data, so that the result may suffer from leakage that strays it from the theoretical expectation.

A possible drawback of OFDM signals may be their high crest factor, i.e. a high ratio between the peak level and rms (root mean square). When all harmonics add up in phase, a great peak may be generated, which statistically happens rarely. That means that in order not to clip the signal, a low level must be set with respect to the total dynamic of the analog driver stage. However, the signal to noise ratio may suffer from that, which may endanger the communication reliability.

Several methods may be provided to overcome this effect. One of those is the "tone reservation", which means to dedicate some channels to transmit information other than the payload, and which may purposely be chosen in order to lower the peak of the symbol. While the scarce number of available channels may advise against this solution, according to various embodiments, the already discarded frequency $F_1$ may be used for that purpose. Thus, according to various embodiments, the fundamental frequency $F_1$ may be generated with the purpose of countering the signal peaks and may not be considered by the receiver.

The OFDM modulated signal is transmitted via at least one line over the physical interface.

The high pass behavior of the physical layer has the scope of attenuating and shortening the effect of the crosstalk from the offender signal (i.e. crosstalk from the motor power supply to the sensor data).

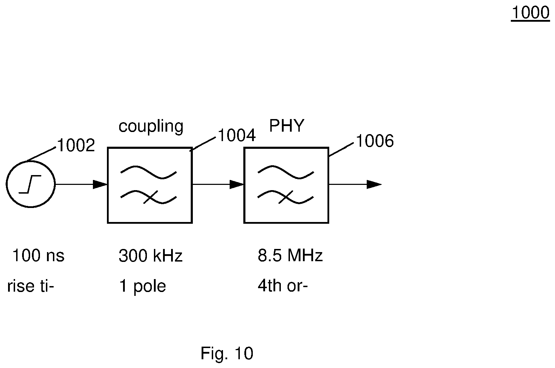

Fig. 10 shows an illustration 1000 of a model of the effect of the physical layer according to various embodiments. A trapezoidal pulse generator 1002 (for example with a rise time of 100ns) may represent the drive power stage output. A first block 1004 may represent the coupling mechanism to this signal (i.e. to the trapezoidal pulse generated by trapezoidal pulse generator 1002) which may be translated into a single pole high pass (for example with a high pass frequency of 300 kHz), since the coupling is mainly capacitive. A filter 1006 provided by the PHY may for example be modelled as a 4th order Butterworth high pass at 8.5 MHz.

The gain of the noise coupling may vary from case to case and may depend on several factors, like for example the effectiveness of the data line shielding and the common mode to differential mode conversion factor of the system. In order to describe the basic concept of various embodiments, the noise may be disregarded and the absolute amplitude of the noise may not be significant in the examples described herein. In order to evaluate an embodiment regarding the frequency behavior, a conservative assumption is made that everything above 300 kHz is fully coupled (which is represented by the first block 1004 in Fig. 9).

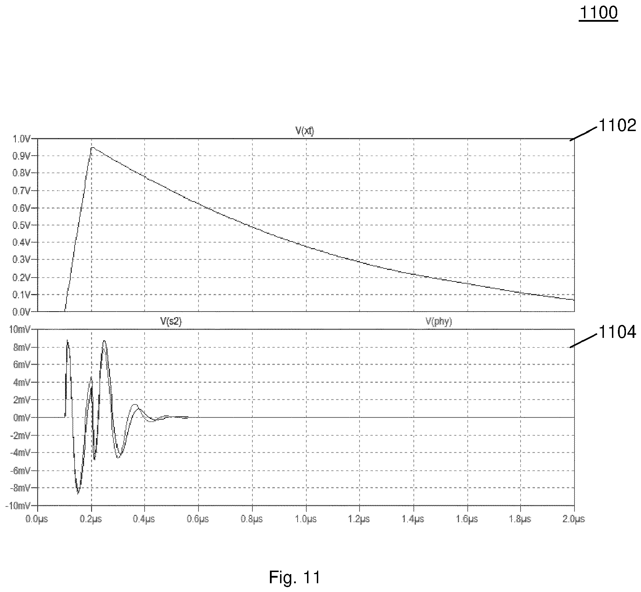

Fig. 11 shows illustrations 1100 of results obtained by a simulation of the model of Fig. 10 with Spice. The upper graph 1102 of Fig. 11 shows the output of the coupling block 1004 which is what can be expected directly on the line. The lower graph 1104 of Fig. 11 shows the output of the model shown in Fig. 11 with a simulation of the actually implemented PHY (i.e. with a more detailed model of the physical layer); the two results are so close together that there is almost no difference visible in the plot 1104 of Fig. 11.

The significant portion of the noise on the receiving end of the chain lasts less than 300 ns, as is shown in the plot 1104 of Fig. 11.

With the PHY according to various embodiments, a signal may be transmitted on the line with low attenuation. The incoming signal may be extracted from the line cutting the frequencies below the useful range (for example, cutting the frequencies below about 10 MHz). The PHY according to various embodiments may provide a path for injecting and retrieving the DC power supply. An impedance equal to the characteristic impedance of the line may be provided in order to avoid reflections. The receiving port may be isolated (or shielded) from the common mode disturbance coming from the line.

Crosstalk may be limited by a differential transmission scheme, wherein the electrical information is sent as a voltage difference on the lines, and retrieved by making the circuit sensible to the voltage difference only. Mostly, the noise is injected on both lines of the twisted pair by the same amount so that the difference operation made at the receiving side cancels it. Unbalances (different input impedances of the two branches, or differences in the coupling between the two wires of the couple) generate distortions, so that the noise is injected differently on the two inputs and the difference operation does not completely cancel it. In order to improve the symmetry of the circuit, it may be desired to achieve an input impedance as high as possible for common mode signals, in order to limit the common mode currents generated by the crosstalk as much as possible.

Fig. 12 shows an illustration 1200 of a detailed model of the physical layer according to various embodiments, which may include a transformer 1202 and a network of passive components 1204, 1206, 1208, 1210, 1212, 1214, 1216, 1218, 1220, 1222, that implement the high pass filtering.

The PHY contains a high pass filter between the physical reception point of the interface and the further processing (A/D (analog/digital) converter). The signal enters from the "LINE" port 1244, passes through the transformer 1202 and then through a block (including a resistor R2 (1204), a resistor R7 (1206), a capacitor C3 (1208), a capacitor C12 (1210), an inductance L2 (1212), and inductance L3 (1214), a capacitor C2 (1216), a capacitor C11 (1218), an inductance L4 (1220), and a resistor R5 (1222)) which implements the high pass filter before reaching the A/D converter at port "RX" (receive port) 1240. Similarly, signals may be transmitted from the port "TX" (transmit port) 1238 to the "LINE" port 1244.

DC power may be injected in a DC path 1242. A signal/DC splitter may be provided by an inductance L1 (1224), an inductance L5 (1226), a capacitor C1 (1228), and a capacitor C13 (1230).

In order to improve the symmetry of the circuit, it may be desired to achieve an input impedance as high as possible for common mode signals, in order to limit the common mode currents generated by the crosstalk as much as possible, which may be the main role of the transformer 1202. Capacitors C10 (1232) and C5/C9 (1234/1236) may be placed on the central taps of the transformer 1202 to ground the common mode components.

The resistors R1 (1246) and R8 (1248) allow to inject the signal on the line maintaining the right impedance and reading at the same time the incoming signal.

The resistors R3 (1250) and R6 (1252) may provide dumping the resonance peak created by the inductances L1 (1224) and L5 (1226) interacting with the system capacitances.

The capacitors C6 (1254), C7 (1256), and C8 (1258) are bypass capacitors to keep a very low impedance on the DC output at all frequencies of interest.

According to various embodiments, the transmission of the signals may be robust. A first degree of robustness may be given by the high pass PHY combined with the signal modulation. According to various embodiments, using OFDM, 12 bits may be combined into a symbol that lasts 266 ns (wherein the actual information portion is 213 ns). In contrast to a baseband scheme, where every instant is dedicated to the transmission of a single bit, according to various embodiments, more bits may be simultaneously spread over time using OFDM, making it more unlikely that a single noise peak could completely flip the transmitted state. The same consideration can be translated in frequency domain: every channel is disturbed just by the noise content at its particular frequency, which is less than the total.

It is to be noted that increasing the offender slew rate may result in a higher but shorter response at the end of the chain. However, considering that one noise event could completely destroy all the bits carried by two consecutive symbols may be extremely pessimistic.

According to various embodiments, the robustness of the transmission of the signals may further be increased by applying error correction coding. The increased data throughput according to various embodiments allows dedicating a part of the data throughput for adding redundancy. For example, the Golay(24,12) encoding scheme may be considered for its error correction capability. The Golay(24,12) encoding scheme is a block code that adds 12 redundancy bits to every 12 payload bits and guarantees the correction of up to three errors in the resulting packet.

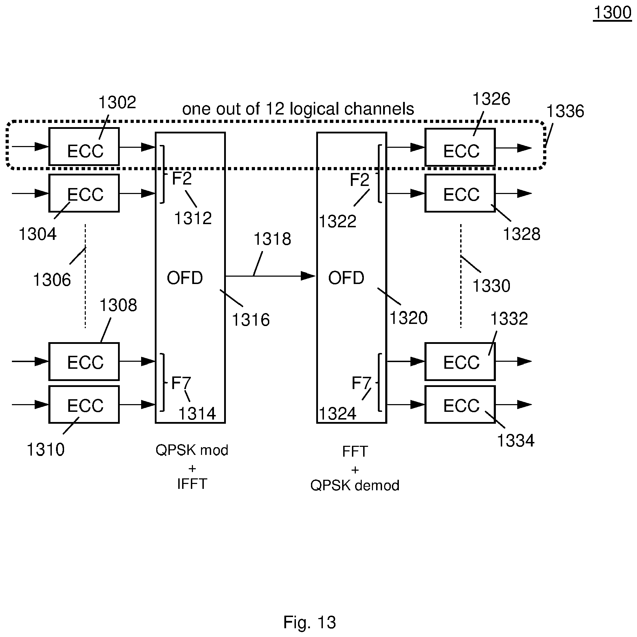

Fig. 13 shows an illustration 1300 of an error encoding scheme where the bit stream of every logical channel is protected individually with the error correction coding scheme according to various embodiments. Protecting the bit stream of every logical channel individually with the error correction coding scheme may provide high robustness.

For example, a data unit made by 24 symbols, where 12 streams are simultaneously encoded and sent, may be considered. An ECC (error correction code) may be provided by each of the ECC operators 1302, 1304, 1308, 1310 (for example encoders). Each frequency F2 (1312), F3, ..., F6, F7 (1314) may carry two ECCs, which may be modulated and an IFFT may be applied by block 1316 before transmitting the resulting signal over media (for example at least one line) 1318. FFT and demodulation may be carried out by block 1320, to reconstruct the frequencies F2 (1322), F3, ..., F6, F7 (1324), and the ECC operators 1326, 1328, 1330, 1332, and 1334 (for example decoders) may reconstruct the respective ECCs. One of the 12 logical channels 1336 is indicated by a dotted box for illustration purposes in Fig. 13.

At every 24 * 266 ns = 6.4 $\mu$s a data unit is transferred and every stream produces its 12 bits payload; the throughput is then 144 bits in 6.4 $\mu$s, or 22.5 MBaud.

Under the hypothesis made above of two bits flipped for each data stream at every noise event, the system would sustain statistically one and a half event every 6.4 $\mu$s, so one every 4.2 $\mu$s.

A motor drive switching at 32 kHz produces one event every 15.6 $\mu$s for each motor phase which means one event every 5.2 $\mu$s in total. Also in case that every switching of the power bridge completely destroys two symbols, the payload would not be affected. Besides the very conservative assumptions made above, it must be considered that the most challenging events are the simultaneous phase commutations, which happens for instance when the motor is at standstill. This makes stronger noise effects but reduces the frequency of the events, going in the safe direction regarding the error correction.

In an alternative, error correction based on convolutional code and Viterbi decoding may be provided, which may require less overhead than the Golay(24,12) encoding.

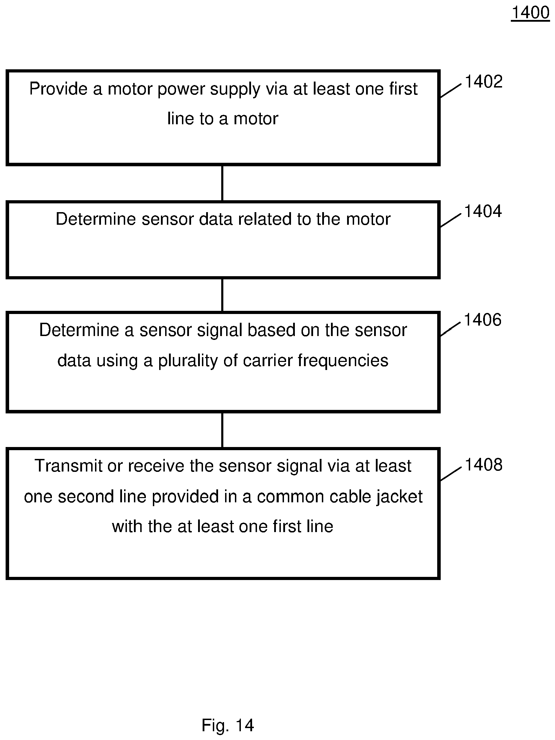

Fig. 14 shows a flow diagram illustrating a data transmission method according to various embodiments. At 1402, a motor power supply may be provided via at least one first line to a motor. At 1404, sensor data related to the motor may be determined. At 1406, a sensor signal may be determined based on the sensor data using a plurality of carrier frequencies. At 1408, the sensor signal may be transmitted or received via at least one second line provided in a common cable jacket with the at least one first line.

According to various embodiments, the motor power supply comprises rising edges with a pre-determined rise time, and the plurality of carrier frequencies comprises respective frequencies which are selected based on the inverse of the rise time. According to various embodiments, the motor power supply comprises falling edges with a pre-determined fall time, and the plurality of carrier frequencies comprises respective frequencies which are selected based on the inverse of the fall time.

According to various embodiments, the motor power supply comprises rising edges with a pre-determined rise time, and the plurality of carrier frequencies comprises respective frequencies which are higher than 10% of the inverse of the rise time, or the plurality of carrier frequencies comprises respective frequencies which are higher than 20% of the inverse of the rise time, or the plurality of carrier frequencies comprises respective frequencies which are higher than 50% of the inverse of the rise time, or the plurality of carrier frequencies comprises respective frequencies which are higher than the inverse of the rise time.

According to various embodiments, the motor power supply comprises falling edges with a pre-determined rise time, and the plurality of carrier frequencies comprises respective frequencies which are higher than 10% of the inverse of the fall time, or the plurality of carrier frequencies comprises respective frequencies which are higher than 20% of the inverse of the fall time, or the plurality of carrier frequencies comprises respective frequencies which are higher than 50% of the inverse of the fall time, or the plurality of carrier frequencies comprises respective frequencies which are higher than the inverse of the fall time.

According to various embodiments, the plurality of carrier frequencies comprises respective frequencies of at least 10 MHz.

According to various embodiments, the sensor signal comprises a data transmission rate of at least 40 MBaud.

According to various embodiments, the at least one second line provides high pass filter characteristics.

According to various embodiments, the sensor signal is determined based on orthogonal frequency-division multiplexing.

According to various embodiments, the sensor signal is determined using an error correction scheme.

According to various embodiments, the error correction scheme comprises Golay encoding.

According to various embodiments, the sensor data comprises a plurality of bits, and determining the sensor signal comprises: grouping a pre-determined number of the plurality of bits into an encoding block; determining at least one error correction bit based on the encoding block; adding the at least one error correction bit to the encoding block; and encoding the encoding block using the plurality of carrier frequencies.

According to various embodiments, the data transmission method further comprises transmitting direct current power via the at least one second line.

According to various embodiments, at least one carrier frequency of the plurality of carrier frequencies is determined based on a minimization of a total signal strength of the plurality of carrier frequencies.

According to various embodiments, the at least one carrier frequency of the plurality of carrier frequencies does not represent the sensor data.

Reference numeral list

| | |
|------|------|
| 100 | commonly used motor arrangement |
| 102 | motor drive |
| 104 | power stage |
| 106 | DSL master |
| 108 | common cable |
| 110 | motor |
| 112 | first slave |
| 114 | second slave |
| 116 | first daisy chain port of first slave |
| 118 | DSL port of first slave |
| 120 | second daisy chain port of first slave |
| 122 | first daisy chain port of second slave |
| 124 | DSL port of second slave |
| 126 | second daisy chain port of second slave |
| | |
| 200 | motor arrangement according to various embodiments |
| 202 | motor drive |
| 204 | power stage |
| 206 | DSL master |
| 208 | common cable |
| 210 | motor |
| 212 | signal distribution device |
| 214 | first slave |
| 216 | second slave |
| | |
| 300 | illustration with a signal distribution device |
| 302 | signal distribution device |
| 304 | magnetic core |
| 306 | first winding |
| 308 | second winding |
| 310 | second winding |
| 312 | input impedance |
| 314 | input impedance |
| 316 | generator |
| 318 | input impedance |
| 320 | resistor |
| 322 | resistor |
| 324 | resistor |
| | |
| 400 | illustration with a signal distribution device |
| 402 | signal distribution device |
| 404 | magnetic core |
| 406 | impedance seen by one port |
| 408 | further winding |
| 410 | negative resistance |
| | |
| 500 | circuit |
| 502 | first resistor |

| | | | | |
|---|---|---|---|---|
| 504 | second resistor | | 1212 | inductance |
| 506 | third resistor | | 1214 | inductance |
| 508 | operational amplifier | | 1216 | capacitor |
| 510 | node | | 1218 | capacitor |
| 512 | winding | | 1220 | inductance |
| | | | 1222 | resistor |
| 600 | illustration of a motor arrangement according to various embodiments | | 1224 | inductance |
| | | | 1226 | inductance |
| 602 | motor | | 1228 | capacitor |
| 604 | sensor | | 1230 | capacitor |
| 606 | controller | | 1232 | capacitor |
| 608 | cable | | 1234 | capacitor |
| 610 | at least one first line | | 1236 | capacitor |
| 612 | at least one second line | | 1238 | transmit port |
| | | | 1240 | receive port |
| 700 | illustration of signal transmission according to various embodiments | | 1242 | DC path |
| | | | 1244 | LINE port |
| 702 | IFFT | | 1246 | resistor |
| 704 | media | | 1248 | resistor |
| 706 | FFT | | 1250 | resistor |
| | | | 1252 | resistor |
| 800 | illustration of a cyclic prefix according to various embodiments | | 1254 | capacitor |
| | | | 1256 | capacitor |
| 802 | symbol n-1 | | 1258 | capacitor |
| 804 | prefix n | | | |
| 806 | symbol n | | 1300 | illustration of an error encoding scheme where the bit stream of every logical channel is protected individually with the error correction coding scheme according to various embodiments |
| 808 | last portion of symbol n | | | |
| 810 | prefix n+1 | | | |
| 812 | symbol n+1 | | | |
| | | | 1302 | ECC operator |
| 900 | illustration of several different constellations according to various embodiments | | 1304 | ECC operator |
| | | | 1306 | ECC operator |
| 902 | PSK constellation | | 1308 | ECC operator |
| 904 | 4-PSK constellation | | 1310 | ECC operator |
| 906 | 8-PSK constellation | | 1312 | F2 |
| 908 | 16-QAM constellation | | 1314 | F7 |
| 910 | circle indicating allowed noise before a transmission error occurs | | 1316 | OFDM |
| | | | 1318 | media |
| 912 | dot indicating element of the alphabet | | 1320 | OFDM |
| | | | 1322 | F2 |
| 1000 | illustration of a model of the effect of the physical layer according to various embodiments | | 1324 | F7 |
| | | | 1326 | ECC operator |
| 1002 | pulse generator | | 1328 | ECC operator |
| 1004 | first block | | 1330 | ECC operator |
| 1006 | filter | | 1332 | ECC operator |
| | | | 1334 | ECC operator |
| 1100 | illustration of results obtained by a simulation of the model of Fig. 5 | | 1336 | dotted box illustrating one logical channel |
| | | | 1400 | a flow diagram illustrating a data transmission method according to various embodiments |
| 1102 | upper graph | | | |
| 1104 | lower graph | | 1402 | step of transmitting a motor power supply via at least one first line to a motor |
| | | | | |
| 1200 | illustration of a detailed model of the physical layer according to various embodiments | | 1404 | step of determining sensor data related to the motor |
| | | | | |
| 1202 | transformer | | 1406 | step of determining a sensor signal based on the sensor data using a plurality of carrier frequencies |
| 1204 | resistor | | | |
| 1206 | resistor | | | |
| 1208 | capacitor | | 1408 | step of transmitting or receiving the sensor signal via at least one second line provided in a |
| 1210 | capacitor | | | |

common cable jacket with the at least one first line

**Claims**

1. Motor arrangement (200) comprising:

   a motor (210);
   a plurality of sensors (214, 216) configured to determine sensor data related to the motor (210);
   a signal distribution device (212, 302);
   a control device (206) configured to transmit or receive sensor signals to or from the plurality of sensors (214, 216) via the signal distribution device (212);
   wherein the signal distribution device (212, 302) comprises:

   a first interface configured to receive or transmit signals from or to the control device (206);
   a plurality of second interfaces, each second interface configured to receive or transmit signals from or to a respective sensor of the plurality of sensors (214, 216);

   wherein the first interface is coupled to a first winding (306); and
   wherein each of the second interfaces is coupled to a respective second winding (308, 310) inductively coupled to the first winding (306),
   wherein the signal distribution device (212, 302) further comprises:
   a further winding (408) coupled to a negative impedance (410) so that an impedance related to the second interfaces and the further winding corresponds to an impedance related to the first interface.

2. The Motor arrangement (200) of claim 1,

   wherein the signal distribution device (212, 302) further comprises a magnetic core (304);
   wherein the first winding (306) and the respective second windings (308, 310) are provided around at least respective portions of the magnetic core (304).

3. The Motor arrangement (200) of at least one of claims 1 or 2,
   wherein the negative impedance (410) comprises a negative impedance converter with current inversion.

4. The Motor arrangement (200) of at least one of claims 1 to 3,

   wherein the first interface is configured to transmit data from the control device (206) to one of the sensors (214, 216) by exciting the second winding (308, 310) of the respective sensor (214, 216) by the first winding (306).

5. The Motor arrangement (200) of at least one of claims 1 to 4,
   wherein the second interface is configured to transmit data from at least one of the sensors (214, 216) to the control device (206) by exciting the first winding (306) by the second winding (308, 310) of the respective sensor (214, 216).

6. The motor arrangement (200) of at least one of claims 1 to 5,
   wherein the signal distribution device (212, 302) is provided at a motor side.

7. The motor arrangement (200) of at least one of claims 1 to 6, further comprising:

   a cable (600) comprising at least one first line (610) and at least one second line (612) in a common cable jacket;
   wherein the control device (206) is connected via the cable (600) and the signal distribution device (212, 302) to the motor (210, 602) and the plurality of sensors (214, 216, 604), the control device (206) configured to transmit a control signal to the motor (210, 602) via the at least one first line (610) and to transmit or receive a sensor signal to or from the plurality of sensors (214, 216, 604) via the at least one second line (612) and the signal distribution device (212, 302).

8. The motor arrangement (200) of at least one of claims 1 to 7,
   wherein the signals comprise a plurality of carrier frequencies.

9. The motor arrangement (200) of at least one of claims 1 to 8,
   wherein the control device (206) is configured to control communication between the control device (206) and the plurality of sensors (214, 216) devices using time division multiplexing.

**Patentansprüche**

1. Motoranordnung (200), umfassend:

   einen Motor (210);
   eine Vielzahl von Sensoren (214, 216), die so konfiguriert sind, dass sie Sensordaten in Bezug auf den Motor (210) bestimmen;

eine Signalverteilungsvorrichtung (212, 302);
eine Steuervorrichtung (206), die so konfiguriert ist, dass sie über die Signalverteilungsvorrichtung (212) Sensorsignale an die Vielzahl von Sensoren (214, 216) sendet oder von ihnen empfängt;
wobei die Signalverteilungsvorrichtung (212, 302) umfasst:

eine erste Schnittstelle, die so konfiguriert ist, dass sie Signale von der Steuervorrichtung (206) empfängt oder an diese sendet;
eine Vielzahl von zweiten Schnittstellen, wobei jede zweite Schnittstelle so konfiguriert ist, dass sie Signale von einem jeweiligen Sensor der Vielzahl von Sensoren (214, 216) empfängt oder an diesen sendet;

wobei die erste Schnittstelle mit einer ersten Wicklung (306) gekoppelt ist; und
wobei jede der zweiten Schnittstellen mit einer jeweiligen zweiten Wicklung (308, 310) gekoppelt ist, die mit der ersten Wicklung (306) induktiv gekoppelt ist,
wobei die Signalverteilungsvorrichtung (212, 302) weiterhin umfasst:
eine weitere Wicklung (408), die mit einer negativen Impedanz (410) gekoppelt ist, so dass eine Impedanz in Bezug auf die zweiten Schnittstellen und die weitere Wicklung einer Impedanz in Bezug auf die erste Schnittstelle entspricht.

2. Motoranordnung (200) nach Anspruch 1,

wobei die Signalverteilungsvorrichtung (212, 302) ferner einen Magnetkern (304) umfasst;
wobei die erste Wicklung (306) und die jeweiligen zweiten Wicklungen (308, 310) um zumindest jeweilige Abschnitte des Magnetkerns (304) herum bereitgestellt sind.

3. Motoranordnung (200) nach mindestens einem der Ansprüche 1 oder 2, wobei die negative Impedanz (410) einen negativen Impedanzwandler mit Stromumkehrung umfasst.

4. Motoranordnung (200) nach mindestens einem der Ansprüche 1 bis 3, wobei die erste Schnittstelle so konfiguriert ist, dass sie Daten von der Steuervorrichtung (206) an einen der Sensoren (214, 216) durch Erregen der zweiten Wicklung (308, 310) des jeweiligen Sensors (214, 216) durch die erste Wicklung (306) überträgt.

5. Motoranordnung (200) nach mindestens einem der Ansprüche 1 bis 4, wobei die zweite Schnittstelle so konfiguriert ist, dass sie Daten von mindestens einem der Sensoren (214, 216) an die Steuervorrichtung (206) durch Erregen der ersten Wicklung (306) durch die zweite Wicklung (308, 310) des jeweiligen Sensors (214, 216) überträgt.

6. Motoranordnung (200) nach mindestens einem der Ansprüche 1 bis 5, wobei die Signalverteilungsvorrichtung (212, 302) an einer Motorseite bereitgestellt ist.

7. Motoranordnung (200) nach mindestens einem der Ansprüche 1 bis 6, ferner umfassend:

ein Kabel (600) mit mindestens einer ersten Leitung (610) und mindestens einer zweiten Leitung (612) in einem gemeinsamen Kabelmantel;
wobei die Steuervorrichtung (206) über das Kabel (600) und die Signalverteilungsvorrichtung (212, 302) mit dem Motor (210, 602) und der Vielzahl von Sensoren (214, 216, 604) verbunden ist, wobei die Steuervorrichtung (206) so konfiguriert ist, dass sie ein Steuersignal über die mindestens eine erste Leitung (610) an den Motor (210, 602) sendet und ein Sensorsignal über die mindestens eine zweite Leitung (612) und die Signalverteilungsvorrichtung (212, 302) an die Vielzahl von Sensoren (214, 216, 604) sendet oder von diesen empfängt.

8. Motoranordnung (200) nach mindestens einem der Ansprüche 1 bis 7, wobei die Signale eine Vielzahl von Trägerfrequenzen umfassen.

9. Motoranordnung (200) nach mindestens einem der Ansprüche 1 bis 8, wobei die Steuervorrichtung (206) so konfiguriert ist, dass sie eine Kommunikation zwischen der Steuervorrichtung (206) und der Vielzahl von Sensorvorrichtungen (214, 216) unter Verwendung von Zeitmultiplexing steuert.

**Revendications**

1. Agencement (200) à moteur comprenant :

un moteur (210) ;
une pluralité de capteurs (214, 216) configurés pour déterminer des données de capteurs en lien avec le moteur (210) ;
un dispositif de distribution de signaux (212, 302) ;
un dispositif de commande (206) configuré pour émettre ou recevoir des signaux de capteurs vers ou depuis la pluralité de capteurs (214, 216) via le dispositif de distribution de signaux (212) ;
dans lequel le dispositif de distribution de signaux (212, 302) comprend :

une première interface configurée pour recevoir ou émettre des signaux depuis ou vers le dispositif de commande (206) ;
une pluralité de secondes interfaces, chaque seconde interface étant configurée pour recevoir ou émettre des signaux depuis ou vers un capteur respectif de la pluralité de capteurs (214, 216) ;
dans lequel la première interface est couplée à un premier bobinage (306) ; et
dans lequel chacune des secondes interfaces est couplée à un second bobinage (308, 310) respectif couplé par induction au premier bobinage (306),

dans lequel le dispositif de distribution de signaux (212, 302) comprend en outre :
un bobinage supplémentaire (408) couplé à une impédance négative (410) de telle sorte qu'une impédance associée aux secondes interfaces et au bobinage supplémentaire correspond à une impédance associée à la première interface.

**2.** Agencement (200) à moteur selon la revendication 1,

dans lequel le dispositif de distribution de signaux (212, 302) comprend en outre un noyau magnétique (304) ;
dans lequel le premier bobinage (306) et les seconds bobinages (308, 310) respectifs sont prévus au moins autour de portions respectives du noyau magnétique (304).

**3.** Agencement (200) à moteur selon l'une au moins des revendications 1 ou 2,
dans lequel l'impédance négative (410) comprend un convertisseur d'impédance négative avec inversion de courant.

**4.** Agencement (200) à moteur selon l'une au moins des revendications 1 à 3,
dans lequel la première interface est configurée pour émettre des données depuis le dispositif de commande (206) vers l'un des capteurs (214, 216) en excitant le second bobinage (308, 310) du capteur (214, 216) respectif via le premier bobinage (306).

**5.** Agencement (200) à moteur selon l'une au moins des revendications 1 à 4,
dans lequel la seconde interface est configurée pour émettre des données depuis l'un au moins des capteurs (214, 216) vers le dispositif de commande (206) en excitant le premier bobinage (306) via le second bobinage (308, 310) du capteur (214, 216) respectif.

**6.** Agencement (200) à moteur selon l'une au moins des revendications 1 à 5,

dans lequel le dispositif de distribution de signaux (212, 302) est prévu au niveau d'un côté moteur.

**7.** Agencement (200) à moteur selon l'une au moins des revendications 1 à 6, comprenant en outre :

un câble (600) comprenant au moins une première ligne (610) et au moins une deuxième ligne (612) dans une gaine de câble commune ;
dans lequel le dispositif de commande (206) est connecté via le câble (600) et le dispositif de distribution de signaux (212, 302) au moteur (210, 602) et à la pluralité de capteurs (214, 216, 604), le dispositif de commande (206) étant configuré pour émettre un signal de commande vers le moteur (210, 602) via ladite au moins une première ligne (610) et pour émettre ou recevoir un signal de capteurs vers ou depuis la pluralité de capteurs (214, 216, 604) via ladite au moins une seconde ligne (612) et le dispositif de distribution de signaux (212, 302).

**8.** Agencement (200) à moteur selon l'une au moins des revendications 1 à 7,
dans lequel les signaux comprennent une pluralité de fréquences porteuses.

**9.** Agencement (200) à moteur selon l'une au moins des revendications 1 à 8,
dans lequel le dispositif de commande (206) est configuré pour commander une communication entre le dispositif de commande (206) et la pluralité de dispositif capteurs (214, 216) en utilisant un multiplexage par répartition dans le temps.

Fig. 1

200

204
202
208
210
POWER STAGE
MOTOR
214
206
212
SLAVE
MASTER
216
SLAVE
MOTOR DRIVE

Fig. 2

Fig. 3

Fig. 4

500

R1  502          R2  504

508

$I_N$

512

$V_N$  510

R3  506

Fig. 5

600

Fig. 6

700

Fig. 7

Fig. 8

900

910
902
904
906
912
908

PSK

4-PSK

8-PSK

16-QAM

Fig. 9

1000

coupling    PHY

—1002        —1004        —1006

100 ns        300 kHz        8.5 MHz

rise ti-        1 pole        4th or-

Fig. 10

1100

Fig. 11

Fig. 12

1300

one out of 12 logical channels

Fig. 13

1400

```
Provide a motor power supply via at least one first       1402
line to a motor

Determine sensor data related to the motor                1404

Determine a sensor signal based on the sensor             1406
data using a plurality of carrier frequencies

Transmit or receive the sensor signal via at least        1408
one second line provided in a common cable jacket
with the at least one first line
```

Fig. 14

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012178758 A